# EUROPEAN PATENT SPECIFICATION

(11) **EP 4 288 571 B1**
(45) Date of publication and mention of the grant of the patent: **18.06.2025**
(21) Application number: 22709064.4
(22) Date of filing: 01.02.2022
(51) Int. Cl.: C21B 13/00, C21B 13/02, B01D 53/14, B01D 53/00, B01D 53/22, C01B 3/50, C25B 1/04

(54) **BLEED-OFF GAS RECOVERY IN A DIRECT REDUCTION PROCESS**
ENTNAHMEGASRÜCKGEWINNUNG IN EINEM DIREKTREDUKTIONSVERFAHREN
RÉCUPÉRATION DE GAZ DE PURGE DANS UN PROCÉDÉ DE RÉDUCTION DIRECTE

(30) Priority: 03.02.2021 SE 2150126
(43) Date of publication of application: 13.12.2023
(73) Proprietor: HYBRIT Development AB, 111 64 Stockholm (SE)
(72) Inventor: MOHSENI-MÖRNER, Farzad, 163 55 Spånga (SE); MARIN, Raimon Perea, 136 48 Handen (SE)
(74) Representative: Zacco Sweden AB
(86) International application number: PCT/SE2022/050105
(87) International publication number: WO 2022/169392

(56) References cited:
- US-A- 6 027 545
- US-A- 6 045 602
- US-A1- 2020 385 827

## Description

### TECHNICAL FIELD

The present disclosure relates to a process for the production of sponge iron from iron ore. The disclosure further relates to a system for the production of sponge iron.

### BACKGROUND ART

Steel is the world's most important engineering and construction material. It is difficult to find any object in the modern world that does not contain steel, or depend on steel for its manufacture and/or transport. In this manner, steel is intricately involved in almost every aspect of our modern lives.

In 2018, the total global production of crude steel was 1 810 million tonnes, by far exceeding any other metal, and is expected to reach 2800 million tonnes in 2050 of which 50% is expected to originate from virgin iron sources. Steel is also the world's most recycled material with a very high recycling grade due to the metals' ability to be used over and over again after remelting, using electricity as the primary energy source.

Thus, steel is a cornerstone of modern society with an even more significant role to play in the future.

Steel is mainly produced via three routes:
i) Integrated production using virgin iron ores in a blast furnace (BF), where iron oxide in the ore is reduced by carbon to produce iron. The iron is further processed in the steel plant by oxygen blowing in a basic oxygen furnace (BOF), followed by refining to produce steel. This process is commonly also referred to as 'oxygen steelmaking'.
ii) Scrap-based production using recycled steel, which is melted in an electric arc furnace (EAF) using electricity as the primary source of energy. This process is commonly also referred to as 'electric steelmaking'.
iii) Direct reduction production based on virgin iron ore, which is reduced in a direct reduction (DR) process with a carbonaceous reducing gas to produce sponge iron. The sponge iron is subsequently melted together with scrap in an EAF to produce steel.

The term crude iron is used herein to denote all irons produced for further processing to steel, regardless of whether they are obtained from a blast furnace (i.e. pig iron), or a direct reduction shaft (i.e. sponge iron).

Although the above-named processes have been refined over decades and are approaching the theoretical minimum energy consumption, there is one fundamental issue not yet resolved. Reduction of iron ore using carbonaceous reductants results in the production of CO₂ as a by-product. For every ton steel produced in 2018, an average of 1.83 tonnes of CO₂were produced. The steel industry is one of the highest CO₂-emitting industries, accounting for approximately 7% of CO₂emissions globally. Excessive CO₂-generation cannot be avoided within the steel production process as long as carbonaceous reductants are used.

The HYBRIT initiative has been founded to address this issue. HYBRIT, short for HYdrogen BReakthrough Ironmaking Technology - is a joint venture between SSAB, LKAB and Vattenfall, funded in part by the Swedish Energy Agency, and aims to reduce CO₂emissions and decarbonize the steel industry.

Central to the HYBRIT concept is a direct reduction based production of sponge iron from virgin iron ore. However, instead of using carbonaceous reductant gases, such as natural gas, as in present commercial direct reduction processes, HYBRIT proposes using hydrogen gas as the reductant, termed hydrogen direct reduction (H-DR). The hydrogen gas may be produced by electrolysis of water using mainly fossil-free and/or renewable primary energy sources, as is the case for e.g. Swedish electricity production. Thus, the critical step of reducing the iron ore may be achieved without requiring fossil fuel as an input, and with water as a by-product instead of CO₂.

When performing a direct reduction process, inert gases such as nitrogen are almost inevitably introduced into the process gas, for example in conjunction with sealing of the direct reduction shaft inlet and/or outlet. Due to their inert nature, the inert gases are passively circulated in the process gas, and additional inert gas is constantly added to the process gas, e.g. when charging iron ore. However, the other components of the process gas are typically either consumed by reaction (e.g. H₂, CO, CH₄) or removed from circulation (e.g. H₂O). This means that inert gas would gradually comprise an ever-increasing proportion of the process gas if no action was taken, and the process gas would gradually lose "reducing strength". In order to avoid such a situation, a proportion of the process gas is typically bled from the process gas circuit and burned in the process gas heater in order to maintain a suitable balance of inert components in the process gas. Such bleeding may also be perfomed in order to control pressure in the process gas circuit.

Document WO 2019/238720 A1 describes a method for producing carburized sponge iron by means of hydrogen-based direct reduction. Used reducing gas is drawn off as top gas. A first partial amount of the top gas is used as fuel gas for heating the reducing gas and/or the carburizing gas. The size of this first partial amount of the top gas is regulated as a function of nitrogen and/or carbon dioxide and/or carbon monoxide and/or methane content in the top gas.

There remains a need for improved means of producing sponge iron using hydrogen-based direct reduction.

### SUMMARY OF THE INVENTION

In conventional direct reduction processes, the reducing gas is typically derived from natural gas and the process gas heater is typically fired with natural gas, so the aformentioned bleeding and combustion of the process gas is economically justifiable, since it merely involves replacing a proportion of the natural gas used in firing the process gas heater with the bleed-off gas derived from natural gas.

However, the inventors of the present invention have identified a number of shortcomings with such means of ensuring balanced inert content in the process gas when the reducing gas is hydrogen-based. One shortcoming is that hydrogen typically burns with a higher local flame temperature, leading to excessive production of NOx. Although it is feasible to control NOx emissions using emissions reduction technologies, this would add complexity and expense to the process. Another shortcoming is that hydrogen is significantly more expensive than reducing gases conventionally used, particularly when the hydrogen is produced by water electrolysis from renewable energy in order to avoid CO₂ emissions and consumption of fossil fuel. Therefore, merely burning the bleed-off gas is economically deleterious, even if the resulting heat is utilized in heating the process gases.

It would be advantageous to achieve a means of overcoming, or at least alleviating, at least some of the above mentioned shortcomings. In particular, it would be desirable to enable a process for producing sponge iron using hydrogen as reducing gas that is more economically viable. In order to better address one or more of these concerns, a process and system having the features defined in the appended independent claims are provided.

According to a first aspect there is provided a process for the production of sponge iron from iron ore according to the appended independent claim. The process comprises the steps of:
- charging iron ore into a direct reduction shaft;
- introducing a hydrogen-rich reducing gas into the direct reduction shaft in order to reduce the iron ore and produce sponge iron;
- removing a top gas from the direct reduction shaft;
- dividing the top gas into a recycle stream and a bleed-off stream;
- processing the bleed-off stream through a separation unit to provide a hydrogen-enriched off-stream and an inert-enriched off-stream; and
- introducing the recycle stream and the hydrogen-enriched off-stream as constituent parts of the hydrogen-rich reducing gas to the direct reduction shaft.

Such a process controls the balance of inert components in the process gas by bleeding off a proportion of the top gas in a similar way to prior art methods. However, since the bled-off hydrogen gas is subsequently separated from inert gas (e.g. nitrogen) in the process, the hydrogen is not lost or wasted as e.g. heating fuel, and instead a majority of the bled-off hydrogen is recovered and reutilized as reducing gas. This significantly decreases the operating costs of such a process. Moreover, since the majority of the bled-off hydrogen is no longer burned, the risk of excessive NOx emission is significantly diminished or avoided altogether.

An alternative solution to the shortcomings identified would be to treat the entire stream of top gas in order to remove the inert gas. Such a method would avoid the need for separation of the top gas into a recycle stream and a bleed-off stream. However, such a solution would necessitate treatment of vast amounts of top gas as compared to the presently disclosed process, leading to vastly increased capital and operational costs. The presently disclosed process achieves the benefits of controlling the balance of inert components in the process gas at significantly lower capital and operational cost as compared to methods requiring treatment of the entire top gas stream.

A seal gas may be introduced in conjunction with the step of charging iron ore into the direct reduction shaft. This seal gas may thereby form a component part of the top gas. The seal gas may be nitrogen and/or carbon dioxide. Correspondingly, the inert gas may be essentially nitrogen and/or carbon dioxide.

The separation unit may be a cryogenic separation unit, a membrane separation unit, a pressure-swing absorption unit, or an amine CO₂ scrubber. A number of well-established gas separation means may be suitable for separating hydrogen from the inert gas (e.g. nitrogen and/or carbon dioxide). For example, due to the large difference in boiling points between nitrogen (-195,8 °C) and hydrogen (-252,9 °C), cryogenic separation may be a suitable technique from a technical and/or economic standpoint.

The hydrogen-rich reducing gas may comprise hydrogen gas obtained by water electrolysis. For example, the process may further comprise a step of introducing a make-up gas as a constituent part of the hydrogen-rich reducing gas to the direct reduction shaft, wherein the make-up gas comprises, consists essentially of, or consists of, hydrogen gas obtained by water electrolysis. The use of electrolytic hydrogen ensures that less fossil fuels are required in the production of sponge iron. However, electrolytic hydrogen is at present more expensive than reducing gas derived from fossil sources, meaning that the benefits of the presently disclosed process are more pronounced whenever the reducing gas is derived at least in part from water electrolysis.

The process may further comprise a step of introducing a make-up gas as a constituent part of the hydrogen-rich reducing gas to the direct reduction shaft, wherein the make-up gas comprises essentially no carbonaceous components. By ensuring that the make-up gas is essentially carbon-free, this will enable the resulting top gas to also be essentially carbon-free, assuming that no carbonaceous gases are introduced into the top gas by other means, such as in the seal gas or by leakage of carburizing gas into the top gas. If the top gas is essentially carbon-free, there will be no need to treat the top gas to remove carbonaceous components, e.g. by amine absorption of carbon dioxide, and thus the process and process equipment may be considerably simplified. Even if the top gas comprises only a small fraction of carbonaceous component, e.g. from carbon dioxide used as seal gas, this may be controlled using bleed-off, thus still potentially avoiding the need to treat the entire stream of top gas to remove carbonaceous components.

The process may further comprise the steps of:
- carburizing the sponge iron using a carburizing gas in a discrete carburization reactor or zone, thus obtaining carburized sponge iron and spent carburizing gas.
Iron produced by present-day commercial blast furnace or direct reduction routes typically comprises significant amounts of carbon (typically up to 5 wt%), due to carbon incorporation during reduction of the iron ore. It may be desirable for a number of reasons to provide carburization of the sponge iron, since, besides its use as a reducing agent, carbon plays further important roles in the steel-making process. Its presence in the sponge iron lowers the melting point of the iron. During subsequent processing of the sponge iron, the exothermic dissociation of iron carbide and oxidation of carbon to CO supplies heat to the process. The gas evolution in the electric arc furnace due to this CO production provides a foamy slag that assists in thermally insulating the iron melt and helps diminish consumption of the EAF electrodes. For at least these reasons, the presence of carbon in the sponge iron may assist in reducing energy consumption during processing to steel.

By carburizing the sponge iron in a discrete carburization reactor or zone, a carburized sponge iron may still be obtained whilst the presence of carbonaceous components in the top gas may be avoided. This may considerably simplify process and system design, since there will be no need to treat the top gas to remove carbonaceous components, e.g. by amine absorption of carbon dioxide.

The process may further comprise the steps of:
- dividing the spent carburizing gas into a carburization recycle stream and a carburization bleed-off stream;
- removing carbonaceous components from the carburization bleed-off stream; and
- processing the carburization bleed-off stream in a separation unit. The separation unit may be the same separation unit in which the top gas bleed-off stream is processed, or it may be a different separating unit.

Bleed-off is commonly required even in the carburization gas circuit in order to prevent accumulation of inert gases. Moreover, by performing discrete reduction and carburization stages, it is ensured that most of the hydrogen present in the carburizing gas will not be consumed, since little or no reduction occurs in the carburization stage. Therefore, it is desirable to recover and utilize this hydrogen in the reduction stage. Using the process steps as described above, hydrogen present in the carburization bleed-off may be recovered in a similar manner as for the top gas bleed-off, meaning that less electrolytic hydrogen may be required in the reduction stage.

The inert-enriched off-stream may be processed in an auxiliary separation unit to provide an auxiliary hydrogen-enriched off-stream. The auxiliary separation unit may be a membrane separation unit. For example, the (primary) separation unit may be a cryogenic separation unit and the auxiliary separation unit may be a membrane separation unit. Due to process and economic constraints, the inert-enriched off-stream after initial separation may still comprise significant amounts of hydrogen, such as up to 30 vol% hydrogen (vol% being determined at normal conditions of 1 atm and 0 °C). By performing an auxiliary separation step, loss of this hydrogen may be avoided. Membrane separation is particularly suitable for the auxiliary separation step, as such techniques may be particularly effective in separating gas mixtures where nitrogen predominates over hydrogen, such as in the inert-enriched off-stream.

According to a second aspect there is provided a system for the production of sponge iron according to the appended independent claims.

The system comprises:
- a direct reduction shaft comprising a reducing gas inlet and a top gas outlet;
- a source of hydrogen gas arranged in fluid communication with the reducing gas inlet;
- a bleed-off valve arranged in fluid communication with the top gas outlet and arranged to divide top gas between a recycle stream outlet and a bleed-off stream outlet; and
- a separation unit arranged in fluid communication with the bleed-off stream outlet and arranged to separate a bleed-off stream into a hydrogen-enriched stream and an inert-enriched stream.

Effects and features of the second aspect are to a large extent analogous to those described above in connection with the first aspect. Embodiments mentioned in relation to the first aspect are largely compatible with the second aspect.

The separation unit may be a cryogenic separation unit, a membrane separation unit, a pressure-swing absorption unit, or an amine CO₂ scrubber. A number of well-established gas separation means may be suitable for separating hydrogen from the inert gas (e.g. nitrogen and/or carbon dioxide). For example, due to the large difference in boiling points between nitrogen (-195,8 °C) and hydrogen (-252,9 °C), cryogenic separation may be a suitable technique from a technical and/or economic standpoint.

The source of hydrogen gas may be a water electrolyser unit. The use of electrolytic hydrogen ensures that less fossil fuels are required in the production of sponge iron. However, electrolytic hydrogen is at present more expensive than reducing gas derived from fossil sources, meaning that the benefits of the presently disclosed process are more pronounced whenever the reducing gas is derived at least in part from water electrolysis.

The direct reduction shaft may comprise a reduction zone and a carburization zone. The direct reduction shaft may be arranged to prevent passage of gas from the carburization zone to the reduction zone. Thus, reduction and carburization may be performed as separate discrete stages in a common reactor having a reducing circuit and a carburizing circuit.

Alternatively, or in addition, the system may comprise a carburization reactor. This allows carburization to be performed in a separate reactor, and decreases the risk of carburizing gas being inadvertently introduced into the process gas of the reduction stage.

The carburization zone or carburization reactor may comprise a carburizing gas inlet and a spent carburizing gas outlet. In such a case, the system may further comprise:
- a source of carburizing gas arranged in fluid communication with the carburizing gas inlet; and
- a carburization bleed-off valve arranged in fluid communication with the spent carburizing gas outlet and arranged to divide spent carburizing gas between a carburization recycle stream outlet and a carburization bleed-off stream outlet.

The carburization bleed-off stream outlet may be arranged in fluid communication with a separation unit. The separation unit may be the same separation unit in which the top gas bleed-off stream is processed, or it may be a different separating unit.

Such an arrangement allows hydrogen to be recovered from carburization bleed-off gas as described above, and thus assists in decreasing consumption of electrolytic hydrogen.

The system may comprise one or more carbon separation units, and wherein the carburization bleed-off stream outlet is arranged in fluid communication with the separation unit via the one or more carbon separation units. The carbon separation units allows unreacted carbonaceous components, such as hydrocarbons, CO and/or CO₂, to be removed from the carburization bleed-off stream prior to conveying this stream to the separation unit for separation of H2 and N2. The carbon separation units may for example comprise a hydrocarbon separation unit (such as a cryogenic hydrocarbon separation unit) and/or a CO₂ separation unit. However, according to some embodiments, the system does not comprise a CO₂ separation unit. For example, if the sponge iron is sufficiently reduced prior to initiation of the carburization stage, and the carburizing gas does not comprise significant amounts of oxygenous components, the carburization bleed-off gas will not comprise significant amounts of CO₂, and no CO₂ separation unit will be necessary.

The system may comprise an auxiliary separation unit arranged in fluid communication with an inert-enriched stream outlet of the separation unit. The auxiliary separation unit may be a membrane separation unit. For example, the (primary) separation unit may be a membrane separation unit or cryogenic separation unit and the auxiliary separation unit may be a membrane separation unit.

Further objects, advantages and novel features of the present invention will become apparent to one skilled in the art from the following detailed description.

### BRIEF DESCRIPTION OF THE DRAWINGS

For a fuller understanding of the present invention and further objects and advantages of it, the detailed description set out below should be read together with the accompanying drawings, in which the same reference notations denote similar items in the various diagrams, and in which:
- Fig. 1: schematically illustrates an iron ore-based steelmaking value chain according to the Hybrit concept;
- Fig. 2a: schematically illustrates an exemplifying embodiment of a system suitable for performing a process as disclosed herein;
- Fig. 2b: schematically illustrates another exemplifying embodiment of a system suitable for performing a process as disclosed herein;
- Fig. 2c: schematically illustrates a further exemplifying embodiment of a system suitable for performing a process as disclosed herein; and
- Fig. 3: is a flow chart schematically illustrating an exemplifying embodiment of a process as disclosed herein;

### DETAILED DESCRIPTION

The present invention is based upon an insight by the inventors that prior art means of controlling inert gas content and/or pressure in the process gas circuit by combusting a proportion of the top gas is undesirable when using hydrogen as the reducing gas, for a variety of reasons. Combusting hydrogen leads to production of greater amounts of NOx as compared to combustion of conventional reducing gases (such as syngas). Moreover, since hydrogen is typically more expensive to produce as compared to syngas, the combustion of hydrogen is economically deleterious, even if process heat is generated. This is especially the case when the hydrogen-rich reducing gas is produced by relatively expensive mean, such as by water electrolysis.

The presently disclosed process avoids such disadvantages by separating the bleed-off gas into a hydrogen-enriched fraction and an inert-enriched fraction. The hydrogen-enriched fraction is then recycled back to the direct reduction shaft.

### Definitions

The term process gas is used herein to denote the gas mixture in the direct reduction process, regardless of stage in the process. That is to say that process gas refers to gas that is introduced to, passes through, leaves, and is recycled back to the direct reduction shaft. The process gas may be reduction process gas, if used in the reduction stage, or carburization process gas, if the process entails a carburization stage. More specific terms are used to denote the process gas at various points in the process, or to denote component gases added to the process gas to form part of the process gas.

Reducing gas is a gas capable of reducing iron ore to metallic iron. The reducing components in conventional direct reduction processes are typically hydrogen and carbon monoxide, but in the presently disclosed process, the reducing component is predominantly or exclusively hydrogen. The reducing gas is introduced at a point lower than the inlet of the direct reduction shaft, and flows upwards counter to the moving bed of iron ore in order to reduce the ore.

Top gas is process gas that is removed from an upper end of the direct reduction shaft, in proximity to the ore inlet. The top gas typically comprises a mixture of partially spent reducing gas, including oxidation products of the reducing component (e.g. H2O), and inert components introduced to the process gas as e.g. seal gal. After treatment, the top gas may be recycled back to the direct reduction shaft as a component of the reducing gas.

Bleed-off is a stream separated from the top gas in order to control the content of the process gases, and in particular to prevent accumulation of inert components in the process gas. Bleed-of may also be used to control the pressure prevailing in the direct reduction system.

Carburizing gas is gas used in an optional carburization stage to provide a carburized (carbon-containing) sponge iron. The carburizing gas may be any gas known or expected in the art to provide carburization. Gas in this respect refers to a substance that is gaseous at the high temperatures prevailing in the carburization reactor, although it may be liquid or solid at room temperature. Suitable carburization gases include hydrocarbons such as methane, natural gas, LPG or petroleum, or other carbonaceous substances such as syngas, lower (C1-C6) alcohols, esters and ethers. The carburizing gas may be of fossil origin, but it is preferable that it is obtained partly or wholly from a renewable source in order to reduce net CO₂ emissions.

A bleed-off stream removed from spent carburization gas in order to prevent accumulation of inert components in the carburization process gas is termed the carburization bleed-off stream.

Make-up gas is fresh gas added to the process gas in order to maintain reducing ability. Typically, make-up gas is added to recycled top gas prior to re-introduction into the direct reduction shaft. Thus, the reducing gas typically comprises make-up gas together with recycled top gas. The make-up gas and recycled top gas may be mixed together prior to introduction into the direct reduction shaft, or may be introduced separately and mixed in the shaft.

Seal gas is gas entering the direct reduction shaft from the ore charging arrangement at the inlet of the direct reduction shaft. The outlet end of the direct reduction shaft may also be sealed using a seal gas, and seal gas therefore may enter the DR shaft from a discharging arrangement at the outlet of the direct reduction shaft. The seal gas is typically an inert gas in order to avoid explosive gas mixtures being formed at the shaft inlet and outlet. Inert gas is gas that does not form potentially flammable or explosive mixtures with either air or process gas, i.e. a gas that may not act as an oxidant or fuel in a combustion reaction under the conditions prevailing in the process. The seal gas may consist essentially of nitrogen and/or carbon dioxide. Therefore, the inert gas to be removed from the bleed-off may also consist essentially of nitrogen and/or carbon dioxide. Note that although carbon dioxide is termed herein as an inert gas, it may under conditions prevailing in the system react with hydrogen in a water-gas shift reaction to provide carbon monoxide and steam.

### Reduction

The direct reduction shaft may be of any kind commonly known in the art. By shaft, it is meant a solid-gas countercurrent moving bed reactor, whereby a burden of iron ore is introduced at an inlet at the top of the reactor and descends by gravity towards an outlet arranged at the bottom of the reactor. Reducing gas is introduced at a point lower than the inlet of the reactor and flows upwards counter to the moving bed of ore in order to reduce the ore to metallized iron. Reduction is typically performed at temperatures of from about 900 °C to about 1100 °C. The temperatures required are typically maintained by pre-heating of the process gases introduced into the reactor, for example using a preheater such as an electric preheater. Further heating of the gases may be obtained after leaving the pre-heater and prior to introduction into the reactor by exothermic partial oxidation of the gases with oxygen or air. Reduction may be performed at a pressure of from about 1 bar to about 10 bar in the DR shaft, preferably from about 3 bar to about 8 bar. The reactor may have a cooling and discharge cone arranged at the bottom to allow the sponge iron to cool prior to discharge from the outlet.

The iron ore burden typically consists predominantly of iron ore pellets, although some lump iron ore may also be introduced. The iron ore pellets typically comprise mostly hematite, together with further additives or impurities such as gangue, fluxes and binders. However, the pellets may comprise some other metals and other ores such as magnetite. Iron ore pellets specified for direct reduction processes are commercially available, and such pellets may be used in the present process. Alternatively, the pellets may be specially adapted for a hydrogen-rich reduction step, as in the present process.

The reducing gas is hydrogen-rich. By reducing gas it is meant the sum of fresh make-up gas plus recycled process gases being introduced into the direct reduction shaft. By hydrogen-rich it is meant that the reducing gas entering the direct reduction shaft may comprise or consist of greater than 70 vol% hydrogen gas, such as greater than 80 vol% hydrogen gas, or greater than 90 vol% hydrogen gas (vol% determined at normal conditions of 1 atm and 0 °C). Preferably, the reduction is performed as a discrete stage. That is to say that carburization is not performed at all, or if carburization is to be performed, it is performed separately from reduction, i.e. in a separate reactor, or in a separate discrete zone of the direct reduction shaft. This considerably simplifies treatment of the top gas, since it is avoids the need to remove carbonaceous components, and the expense associated with such removal. In such a case, the make-up gas may consist essentially of, or consist of, hydrogen gas. Note that some quantities of carbon-containing gases may be present in the reducing gas, even if the make-up gas is exclusively hydrogen. For example, if the outlet of the direct reduction shaft is coupled to the inlet of a carburization reactor, relatively small quantities of carbon-containing gases may inadvertently permeate into the direct reduction shaft from the carburization reactor. As another example, carbonates present in the iron ore pellets may be volatilized and manifest as CO₂ in the top gas of the DR shaft, resulting in quantities of CO₂ that may be recycled back to the DR shaft. Due to the predominance of hydrogen gas in the reducing gas circuit, any CO₂ present may be converted by reverse water-gas shift reaction to CO.

In some cases it may be desirable to obtain some degree of carburization in conjunction with performing the reduction, as a single stage. In such a case, the reducing gas may comprise up to about 30 vol% of carbon-containing gases, such as up to about 20 vol%, or up to about 10 vol% (determined at normal conditions of 1 atm and 0 °C). Suitable carbon-containing gases are disclosed bellow as carburizing gases.

The hydrogen gas may preferably be obtained at least in part by electrolysis of water. If the water electrolysis is performed using renewable energy then this allows the provision of a reducing gas from renewable sources. The electrolytic hydrogen may be conveyed by a conduit directly from the electrolyser to the DR shaft, or the hydrogen may be stored upon production and conveyed to the DR shaft as required.

The top gas upon exiting the direct reduction shaft will typically comprise unreacted hydrogen, water (the oxidation product of hydrogen), and inert gases. If carburization is performed together with reduction, the top gas may also comprise some carbonaceous components such as methane, carbon monoxide and carbon dioxide. The top gas upon exiting the direct reduction shaft may initially be subjected to conditioning, such as dedusting to remove entrained solids, and/or heat exchange to cool the top gas and heat the reducing gas. During heat exchange, water may be condensed from the top gas. Preferably, the top gas at this stage will consist essentially of hydrogen, inert gas and residual water. However, if carbonaceous components are present in the top gas, such carbonaceous components may also be removed from the top gas, for example by reforming and/or CO₂ absorption.

After appropriate conditioning, the top gas is partitioned into a recycle stream and a bleed-off stream by passage through a bleed-off valve. The exact proportion of the bled-off stream to recycle stream may vary depending on e.g. the proportion of inert gas in the top gas, and may be varied throughout the process as appropriate. For example, the ratio of the top gas recycle stream to bleed-off stream (expressed as volumetric flow) may be from about 99:1 to about 60:40, preferably from about 98:2 to about 80:20, more preferably from about 96:4 to about 90:10. Typically, in prior art processes, the bleed-off is disposed of by combustion. However, in the presently disclosed process, the bleed-off stream is instead separated into a hydrogen-enriched off-stream and an inert-enriched off-stream. This separation may be performed using any method known in the art, including but not limited to cryogenic separation, membrane separation, pressure swing absorption, and amine CO₂ scrubbing. For example, due to the relatively large difference in the boiling points of nitrogen (-195,8 °C) and hydrogen (-252,9 °C), cryogenic separation may be an appropriate means of separation if nitrogen is used as the seal gas. By separating only the bleed-of, and not treating the entire conditioned top gas stream, inert balance may be maintained and hydrogen losses decreased without requiring the large capital and operating expenses that treating the entire top gas stream would entail.

By "hydrogen-enriched" it is meant that the off-stream contains a higher proportion of hydrogen as compared to the ingoing bleed-off stream. By "inert-enriched" it is meant that the off-stream contains a higher proportion of inert gas as compared to the ingoing bleed-off stream. The hydrogen-enriched off-stream may comprise at least 70 vol% hydrogen, such as at least 80 vol% hydrogen, at least 90 vol% hydrogen, or at least 95 vol% hydrogen. The inert-enriched off-stream may comprise at least 50 vol% inert gas, such as at least 70 vol% inert gas.

The hydrogen-enriched off-stream, together with the top gas recycle stream and make-up gas, is subsequently introduced to the direct reduction shaft as reducing gas. In this manner, economic use is made of hydrogen.

The inert-enriched off-stream is disposed of in an appropriate manner. If the inert-enriched off-stream comprises significant amounts of hydrogen, it may be subjected to an auxiliary separation in order to recover further hydrogen prior to disposal. This auxiliary separation may be performed using any method known in the art, including but not limited to cryogenic separation, membrane separation, and pressure swing absorption. Membrane separation may be particularly effective in separating mixtures where nitrogen predominates over hydrogen, and thus membrane separation is a preferred means of auxiliary separation when the seal gas comprises nitrogen.

### Carburization

It may in some cases be desirable to produce a carburized sponge iron. In such cases, carburization may be performed as a discrete stage in the process. By discrete stage, it is meant that the reduction process gases and carburization process gases may be handled separately, and no unintentional mixing occurs between the two process gas circuits. This is easiest to achieve by performing carburization in a separate reactor, but may also be achieved by performing carburization in a separate, discrete carburization zone of the direct reduction shaft, provided that appropriate measures are taken to avoid mixing of gases between the reduction zone and the carburization zone.

If a separate carburization reactor is to be used, such a reactor may preferably be a shaft reactor. As previously described, by shaft, it is meant a solid-gas countercurrent moving bed reactor. In this case sponge iron is introduced at the inlet of the reactor and a carburizing gas flows countercurrent to the moving sponge iron bed in order to carburize and optionally further reduce the sponge iron. A carburized sponge iron is obtained at the outlet of the reactor.

Alternatively, the carburization reactor may be a conveyor unit or batch reactor. However, continuous reactors such as a carburization shaft are preferred.

The DR shaft and carburization reactor may be coupled such that the outlet of the DR shaft is coupled directly to the inlet of the carburization reactor, provided that an arrangement is provided to prevent carburization gas from permeating into the DR shaft to any significant extent. Such an arrangement may comprise a pressure differential between the reactors preventing permeation of carburization gas into the direct reduction shaft, and/or a lock or discharge device providing a physical barrier to gas transport into the direct reduction shaft. Alternatively, the DR shaft and carburization unit may be coupled by a shaft or chute, or may utilize further means to transport the sponge iron intermediate, such as one or more transport crucibles.

The carburizing gas may be any gas known or expected in the art to provide carburization. Gas in this respect refers to a substance that is gaseous at the high temperatures prevailing in the carburization reactor, although it may be liquid or solid at room temperature. Suitable carburization gases include hydrocarbons such as methane, natural gas, LPG or petroleum, or other carbonaceous substances such as syngas, lower (C1-C6) alcohols, esters and ethers. The carburizing gas may be of fossil origin, but it is preferable that it is obtained partly or wholly from a renewable source in order to reduce net CO₂ emissions. By renewable it is meant a resource that is naturally replenished on a human timescale. The high utilization of carbon present in the carburizing gas permits use of renewable carburizing gases, despite their relative scarcity and high cost as compared to fossil equivalents. Suitable renewable carburizing gases include biomethane, biogas, gas obtained from the pyrolysis or partial combustion of biomass, lower alcohols or ethers such as methanol, DME or ethanol derived from renewable feedstocks, or combinations thereof. Sulfur-containing carburization gases may be used, as the sulfur is known to prevent nucleation of graphite and passivate the carburized sponge iron product.

The carburization stage may be arranged to proceed to provide a sponge iron product having any desired carbon content. A desirable carbon content may typically be in the range of from about 1 % by weight to about 3% by weight. This may be arranged by judicious choice of carburization process parameters including, but not limited to, residence time in the reactor, reaction temperature, reaction pressure, flow rate of carburizing gas and composition of carburizing gas. The temperatures required are typically maintained by pre-heating of the process gases introduced into the reactor, for example using a preheater such as an electric preheater. Further heating of the gases may be obtained after leaving the pre-heater and prior to introduction into the reactor by exothermic partial oxidation of the gases with oxygen or air. However, if hot sponge iron intermediate is introduced as feed into the carburization reactor and a cool sponge iron product is desired then no preheater or partial oxidation may be necessary. The carburization reactor may have a cooling and discharge cone arranged at the bottom to allow the carburized sponge iron to cool prior to discharge from the outlet.

The spent carburization gas may be treated to remove undesirable components and recycled back to the carburization reactor and/or reduction reactor. For example, hydrogen may be separated from the carburization off-gas and either stored or conveyed directly to the DR shaft for use as reducing gas. Such a separation may for example be performed using membrane separation techniques or pressure swing adsorption. The off-gas may undergo a reformation step to reform any CO₂ formed during carburization to CO. Alternatively, any CO₂ formed during carburization may be captured and either stored (CCS), reformed, released or utilized for other purposes (CCU). Any water and/or dust in the carburization gas may be removed. The remaining gases, comprising mostly unreacted carburization gas and CO, may be recycled back to the carburization reactor.

In order to maintain an appropriate balance of inert gas in the carburization process gas, it may be necessary to provide a carburization bleed-off. In such a case, this bleed-off may be subjected to separation in a similar manner as for the reduction bleed-off in order to recover even more hydrogen for use as reducing gas. The carburization bleed-off may be treated in the same separation unit as the reduction bleed-off, or may be treated in a discrete separation unit.

In order to improve the utilization of the resources used in the process, the carburization and reduction stages may be integrated in a variety of manners. For example, the hydrogen formed in the carburization stage may be used in the reduction stage as described above, or the CO₂ formed in the carburization stage may be reformed to CO for further carburization. The off-gas from the carburization stage and/or top gas from the reduction stage may be fed through one or more heat exchangers in order to pre-heat gases to be introduced into the reactor.

### Sponge iron

The sponge iron product of the process described herein is typically referred to as direct reduced iron (DRI). Depending on the process parameters, it may be provided as hot (HDRI) or cold (CDRI). Cold DRI may also be known as Type (B) DRI. DRI may be prone to re-oxidation and in some cases is pyrophoric. However, there are a number of known means of passivating the DRI. One such passivating means commonly used to facilitate overseas transport of the product is to press the hot DRI into briquettes. Such briquettes are commonly termed hot briquetted iron (HBI), and may also be known as type (A) DRI.

The sponge iron product obtained by the process herein may be an essentially fully metallized sponge iron, i.e. a sponge iron having a degree of reduction (DoR) greater than about 90%, such as greater than about 94% or greater than about 96%. Degree of reduction is defined as the amount of oxygen removed from the iron oxide, expressed as a percentage of the initial amount of oxygen present in the iron oxide. It is often not commercially favourable to obtain sponge irons having a DoR greater than about 96% due to reaction kinetics, although such sponge irons may be produced if desired.

If carburization is performed, sponge iron having any desired carbon content may be produced by the process described herein, from about 0 to about 7 percent by weight. However, it is typically desirable for further processing that the sponge iron has a carbon content of from about 0.5 to about 5 percent carbon by weight, preferably from about 1 to about 4 percent by weight, such as about 3 percent by weight, although this may depend on the ratio of sponge iron to scrap used in a subsequent EAF processing step.

### Embodiments

The invention will now be described in more detail with reference to certain exemplifying embodiments and the drawings. However, the invention is not limited to the exemplifying embodiments discussed herein and/or shown in the drawings, but may be varied within the scope of the appended claims. Furthermore, the drawings shall not be considered drawn to scale as some features may be exaggerated in order to more clearly illustrate certain features.

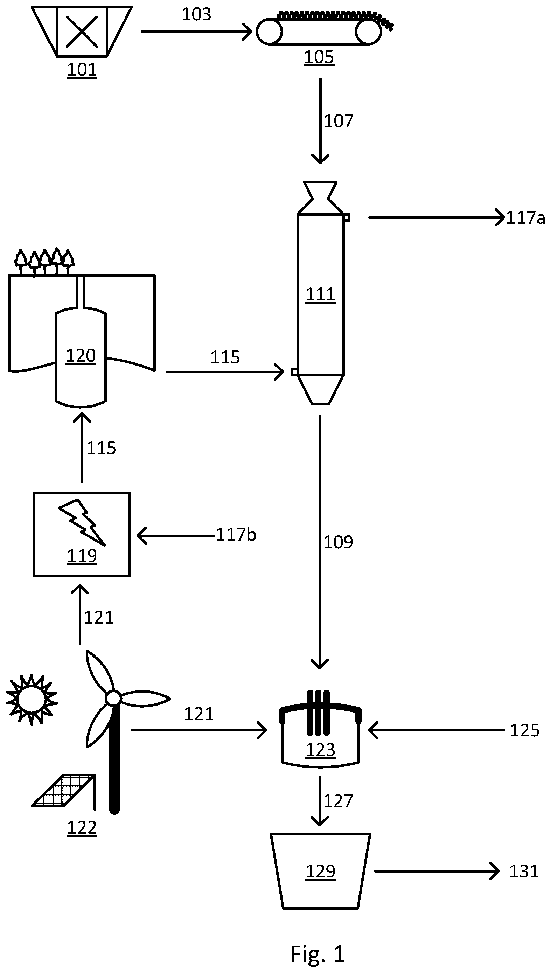

Figure 1 schematically illustrates an iron ore-based steelmaking value chain according to the Hybrit concept. The iron ore-based steelmaking value chain starts at the iron ore mine 101. After mining, iron ore 103 is concentrated and processed in a pelletizing plant 105, and iron ore pellets 107 are produced. These pellets, together with any lump ore used in the process, are converted to sponge iron 109 by reduction in a direct reduction shaft 111 using hydrogen gas 115 as the main reductant and producing water 117a as the main by-product. The sponge iron 109 may optionally be carburized, either in the direct reduction shaft 111, or in a separate carburization reactor (not illustrated). The hydrogen gas 115 is produced by electrolysis of water 117b in an electrolyser 119 using electricity 121 that is preferably primarily derived from fossil-free or renewable sources 122. The hydrogen gas 115 may be stored in a hydrogen storage 120 prior to introduction into the direct reduction shaft 111. The sponge iron 109 is melted using an electric arc furnace 123, optionally together with a proportion of scrap iron 125 or other iron source, to provide a melt 127. The melt 127 is subjected to further downstream secondary metallurgical processes 129, and steel 131 is produced. It is intended that the entire value-chain, from ore to steel may be fossil-free and produce only low or zero carbon emissions.

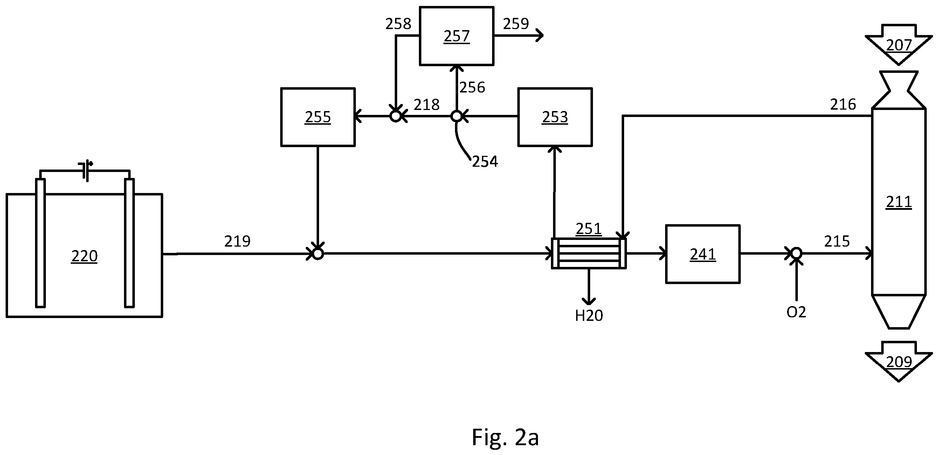

Figure 2a schematically illustrates an exemplifying embodiment of a system suitable for performing the process as disclosed herein.

Iron ore 207 is introduced into direct reduction shaft 211. As the ore 207 passes through the shaft 211 it is progressively reduced to sponge iron 209 by reducing gas 215. Top gas 216, i.e. partially spent reducing gas, exits the direct reduction shaft 211 and is passed through a heat exchanger 251 used to pre-heat the reducing gas 215. Water is condensed from the top gas 216 by passage through the heat exchanger 251. The top gas 216 is then cleaned in cleaning unit 253 to remove further impurities such as dust and residual water. After cleaning, the top gas 216 is passed through a bleed-off valve 254 in order to separate the top gas into a recycle top gas stream 218 and a bleed-off stream 256. The bleed-off stream 256 is passed through a separation unit 257, where it is divided into a hydrogen-enriched off-stream 258 and a nitrogen enriched off-stream 259. The hydrogen-enriched off-stream 258 is re-combined with the recycled top gas 218, passes through compressor 255 and combined with make-up gas 219 to form reducing gas 215. The reducing gas 215 is passed through heat exchanger 251 and preheater 241 to be heated to an appropriate temperature prior to introduction into the direct reduction shaft 211. The preheater 241 may utilize combustion, e.g. combustion of biofuel, or may utilize electric gas heating. The temperature of the reducing gas 215 may be increased further by partial oxidation prior to introduction into the direct reduction shaft 211.

Note that although the bleed-of valve 254 and point of subsequent reintroduction of the hydrogen-enriched off-stream 258 to the recycled top gas 218 are both illustrated as being upstream of the compressor, one or both of these points may be downstream of the compressor.

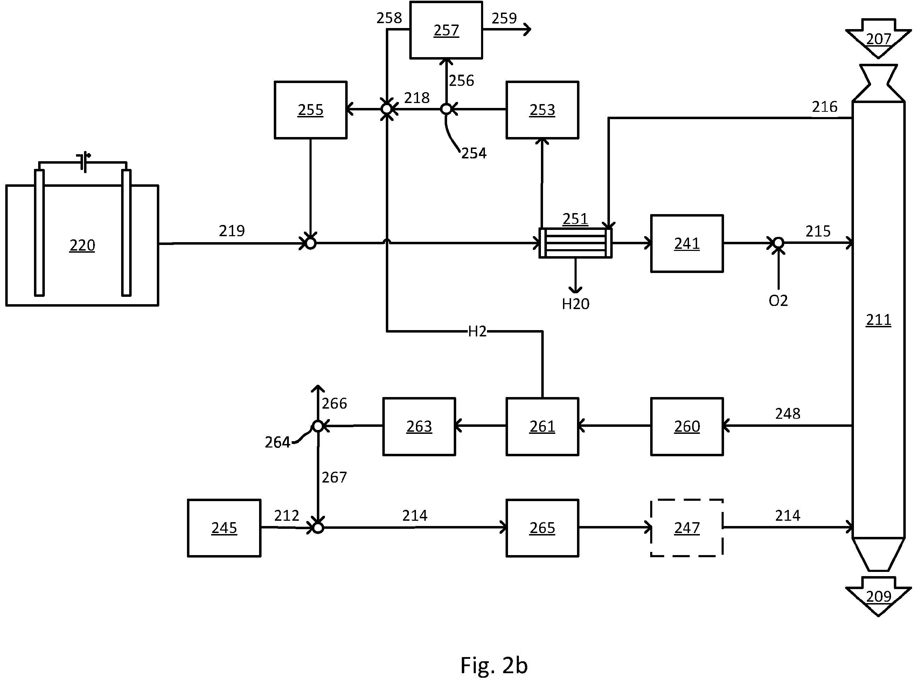

Figure 2b schematically illustrates a system similar to that of Figure 2a, but wherein the direct reduction shaft 211 is provided with a carburization zone in order to obtain a carburized sponge iron 209. Sponge iron 209 is carburized by carburizing gas 214 in a counter-current flow, such that carburized sponge iron 209 is obtained at the discharge outlet of the direct reduction shaft 211. The spent carburization gas 248 exiting the carburization zone is passed through a cleaning unit 260, hydrogen separation unit 261 (separated hydrogen is used as reducing gas 215), and CO₂ absorption unit 263. The spent carburization gas 248 is then passed through a bleed-off valve 264 to divide the spent carburization gas 248 into a recycle stream 267 and a bleed-off stream 266. The bleed-off stream 266 is disposed of in a conventional manner, e.g. by combustion in a preheater. The recycle stream 267 is combined with fresh carburizing gas 212 to provide the carburizing gas 214. Fresh carburizing gas 212 is supplied from a source of carburizing gas 245, such as a biomass gasifier. The carburizing gas 214 is passed through a compressor 265 and optionally a pre-heater 247 prior to introduction into the carburization zone of the direct reduction shaft 211. The temperature of the carburizing gases entering the direct reduction shaft 211 may be further increased by partial oxidation. In such a case, a supply of oxygen (not shown) will be arranged between the preheater 247 and shaft 211.

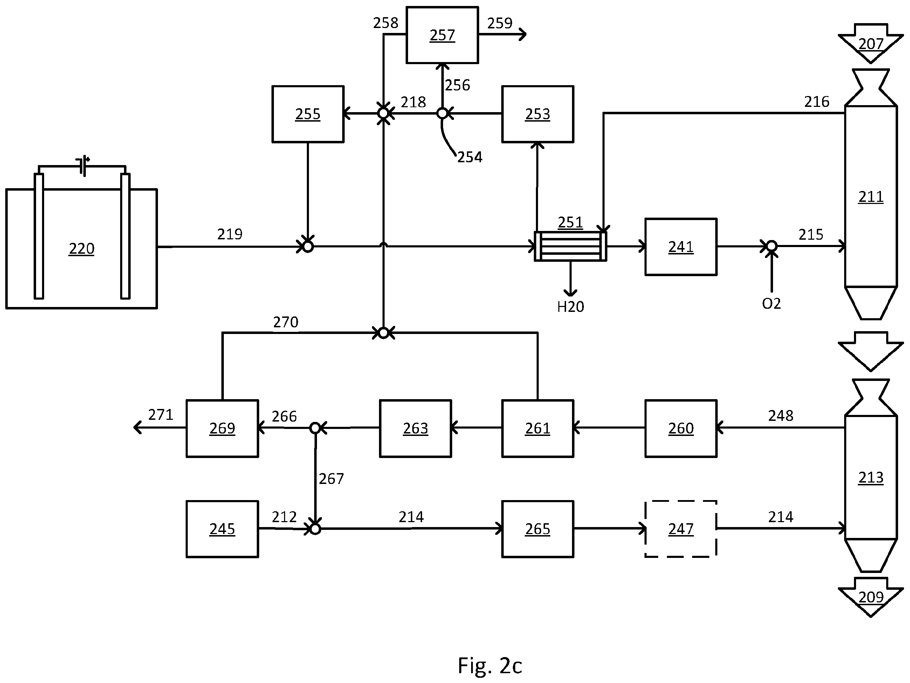

Figure 2c schematically illustrates a system similar to that of Figure 2b. However, in the system of Figure 2c, instead of a discrete carburization zone in the direct reduction shaft 211, carburization is performed in a separate reactor, illustrated as a carburization shaft 213. Moreover, the carburization bleed-off stream 266 is treated in a separation unit 269 to provide a further hydrogen-enriched stream 270, which is utilized as a component part of the reducing gas 215, and a further inert-enriched stream 271, which may be disposed of in a customary manner.

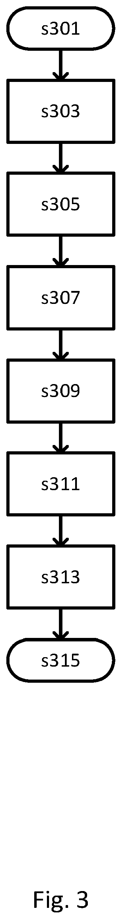

Figure 3 is a flow chart schematically illustrating an exemplifying embodiment of the process disclosed herein. Step s301 denotes the start of the process. In step s303 iron ore is charged into a direct reduction shaft. In step s305 a hydrogen-enriched reducing gas is introduced into the direct reduction shaft in order to reduce the iron ore and produce sponge iron. In step s307 a top gas is removed from the direct reduction shaft. In step s309 the top gas is divided into a recycle stream and a bleed-off stream. In step s311 the bleed-off stream is processed through a separation unit to provide a hydrogen-enriched off-stream and an inert-enriched off-stream. In step s313 the recycle stream and the hydrogen-enriched off-stream are introduced as constituent parts of the hydrogen-rich reducing gas to the direct reduction shaft. Step s315 denotes the end of the process.

## Claims

1. A process for the production of sponge iron from iron ore, the process comprising the steps:
- charging (s303) iron ore (207) into a direct reduction shaft (211);
- introducing (s305) a hydrogen-rich reducing gas (215) comprising greater than 80 vol% hydrogen gas into the direct reduction shaft in order to reduce the iron ore and produce sponge iron (209);
- removing (s307) a top gas (216) from the direct reduction shaft;
- subjecting the top gas to heat exchange in order to cool the top gas and heat the hydrogen-rich reducing gas;
- dividing (s309) the top gas into a recycle stream (218) and a bleed-off stream (256);
- processing (s311) the bleed-off stream through a separation unit (257) to provide a hydrogen-enriched off-stream (258) and an inert-enriched off-stream (259); and
- introducing (s311) the recycle stream and the hydrogen-enriched off-stream as constituent parts of the hydrogen-rich reducing gas to the direct reduction shaft.

2. The process according to claim 1, wherein the separation unit (257) is a cryogenic separation unit, a membrane separation unit, or a pressure-swing absorption unit.

3. The process according to any one of the preceding claims, further comprising a step of introducing a make-up gas (219) as a constituent part of the hydrogen-rich reducing gas to the direct reduction shaft, wherein the make-up gas comprises hydrogen gas obtained by water electrolysis.

4. The process according to any one of the preceding claims, further comprising a step of introducing a make-up gas (219) as a constituent part of the hydrogen-rich reducing gas to the direct reduction shaft, wherein the make-up gas comprises essentially no carbonaceous components.

5. The process according to any one of the preceding claims, further comprising the steps of:
- carburizing the sponge iron using a carburizing gas in a discrete carburization reactor (213) or zone, thus obtaining carburized sponge iron and spent carburizing gas (248);
- dividing the spent carburizing gas into a carburization recycle stream (267) and a carburization bleed-off stream (266);
- removing carbonaceous components from the carburization bleed-off stream; and
- processing the carburization bleed-off stream in a separation unit.

6. The process according to any one of the preceding claims, wherein the inert-enriched off-stream is processed in an auxiliary separation unit to provide an auxiliary hydrogen-enriched off-stream, and wherein the auxiliary separation unit is preferably a membrane separation unit.

7. A system for the production of sponge iron, the system comprising:
- a direct reduction shaft (211) comprising a reducing gas inlet and a top gas outlet;
- a source (220) of make-up gas, the make-up gas consisting essentially of hydrogen gas (219), the source of make-up gas being arranged in fluid communication with the reducing gas inlet;
- a heat exchanger (251) arranged in fluid communication with the top gas outlet;
- a bleed-off valve (254) arranged in fluid communication with the top gas outlet and arranged to divide top gas between a recycle stream outlet and a bleed-off stream outlet;
- a separation unit (257) arranged in fluid communication with the bleed-off stream outlet and arranged to separate a bleed-off stream into a hydrogen-enriched stream and an inert-enriched stream.

8. The system according to claim 7, wherein the separation unit is a cryogenic separation unit, a membrane separation unit, or a pressure-swing absorption unit.

9. The system according to any one of claims 7-8, wherein the source of make-up gas is a water electrolyser unit.

10. The system according to any one of claims 7-9, wherein the direct reduction shaft comprises a reduction zone and a carburization zone, and wherein the direct reduction shaft is arranged to prevent passage of gas from the carburization zone to the reduction zone.

11. The system according to any one of claims 7-9, further comprising a carburization reactor (213).

12. The system according to any one of claims 7-11, wherein the carburization zone or carburization reactor comprises a carburizing gas inlet and a spent carburizing gas outlet, and wherein the system further comprises:
- a source of carburizing gas (245) arranged in fluid communication with the carburizing gas inlet;
- a carburization bleed-off valve (264) arranged in fluid communication with the spent carburizing gas outlet and arranged to divide spent carburizing gas between a carburization recycle stream outlet and a carburization bleed-off stream outlet; and wherein the carburization bleed-off stream outlet is arranged in fluid communication with a separation unit.

13. The system according to claim 12, further comprising a one or more carbon separation units, and wherein the carburization bleed-off stream outlet is arranged in fluid communication with the separation unit via the one or more carbon separation units.

14. The system according to any one of claims 7-13, wherein the system does not comprise a CO₂ separation unit.

15. The system according to any one of claims 7-14, further comprising an auxiliary separation unit arranged in fluid communication with an inert-enriched stream outlet of the separation unit, and wherein the auxiliary separation unit is a membrane separation unit.

## Patentansprüche

1. Verfahren zur Herstellung von Eisenschwamm aus Eisenerz, wobei das Verfahren die folgenden Schritte umfasst:
- Einfüllen (s303) von Eisenerz (207) in einen Direktreduktionsschacht (211);
- Einführen (s305) eines wasserstoffreichen Reduktionsgases (215), das mehr als 80 Vol.-% Wasserstoffgas umfasst, in den Direktreduktionsschacht, um das Eisenerz zu reduzieren und Eisenschwamm (209) herzustellen;
- Entfernen (s307) eines Gichtgases (216) aus dem Direktreduktionsschacht;
- Durchführen eines Wärmeaustauschs an dem Gichtgas, um das Gichtgas zu kühlen und das wasserstoffreiche Reduktionsgas zu erwärmen;
- Aufteilen (s309) des Gichtgases in einen Rückführstrom (218) und einen Ablassstrom (256);
- Verarbeiten (s311) des Ablassstroms durch eine Trenneinheit (257), um einen mit Wasserstoff angereicherten Abstrom (258) und einen mit Inertgas angereicherten Abstrom (259) bereitzustellen; und
- Einführen (s311) des Rückführstroms und des mit Wasserstoff angereicherten Abstroms als Bestandteile des wasserstoffreichen Reduktionsgases in den Direktreduktionsschacht.

2. Verfahren nach Anspruch 1, wobei die Trenneinheit (257) eine kryogene Trenneinheit, eine Membrantrenneinheit oder eine Druckwechselabsorptionseinheit ist.

3. Verfahren nach einem der vorhergehenden Ansprüche, ferner umfassend einen Schritt des Einführens eines Zusatzgases (219) als einen Bestandteil des wasserstoffreichen Reduktionsgases in den Direktreduktionsschacht, wobei das Zusatzgas Wasserstoffgas umfasst, das durch Wasserelektrolyse erhalten wird.

4. Verfahren nach einem der vorhergehenden Ansprüche, ferner umfassend einen Schritt des Einführens eines Zusatzgases (219) als einen Bestandteil des wasserstoffreichen Reduktionsgases in den Direktreduktionsschacht, wobei das Zusatzgas im Wesentlichen keine kohlenstoffhaltigen Komponenten umfasst.

5. Verfahren nach einem der vorhergehenden Ansprüche, ferner umfassend die folgenden Schritte:
- Aufkohlen des Eisenschwamms unter Verwendung eines Aufkohlungsgases in einem separaten Aufkohlungsreaktor (213) oder einer separaten Aufkohlungszone, wodurch aufgekohlter Eisenschwamm und verbrauchtes Aufkohlungsgas (248) erhalten werden;
- Aufteilen des verbrauchten Aufkohlungsgases in einen Aufkohlungsrückführstrom (267) und einen Aufkohlungsablassstrom (266);
- Entfernen kohlenstoffhaltiger Komponenten aus dem Aufkohlungsablassstrom; und
- Verarbeiten des Aufkohlungsablassstroms in einer Trenneinheit.

6. Verfahren nach einem der vorhergehenden Ansprüche, wobei der mit Inertgas angereicherte Abstrom in einer zusätzlichen Trenneinheit verarbeitet wird, um einen zusätzlichen mit Wasserstoff angereicherten Abstrom bereitzustellen, und wobei die zusätzliche Trenneinheit vorzugsweise eine Membrantrenneinheit ist.

7. System zur Herstellung von Eisenschwamm, wobei das System Folgendes umfasst:
- einen Direktreduktionsschacht (211), umfassend einen Reduktionsgaseinlass und einen Gichtgasauslass;
- eine Quelle (220) für Zusatzgas, wobei das Zusatzgas hauptsächlich aus Wasserstoffgas (219) besteht und wobei die Quelle für Zusatzgas in Fluidverbindung mit dem Reduktionsgaseinlass angeordnet ist;
- einen Wärmetauscher (251), der in Fluidverbindung mit dem Gichtgasauslass angeordnet ist;
- ein Ablassventil (254), das in Fluidverbindung mit dem Gichtgasauslass angeordnet ist und dazu angeordnet ist, Gichtgas zwischen einem Rückführstromauslass und einem Ablassstromauslass aufzuteilen;
- eine Trenneinheit (257), die in Fluidverbindung mit dem Ablassstromauslass angeordnet ist und dazu angeordnet ist, einen Ablassstrom in einen mit Wasserstoff angereicherten Strom und einen mit Inertgas angereicherten Strom zu trennen.

8. System nach Anspruch 7, wobei die Trenneinheit eine kryogene Trenneinheit, eine Membrantrenneinheit oder eine Druckwechselabsorptionseinheit ist.

9. System nach einem der Ansprüche 7-8, wobei die Wasserstoffgasquelle eine Wasserelektrolyseeinheit ist.

10. System nach einem der Ansprüche 7-9, wobei der Direktreduktionsschacht eine Reduktionszone und eine Aufkohlungszone umfasst und wobei der Direktreduktionsschacht dazu angeordnet ist, ein Hindurchtreten von Gas von der Aufkohlungszone in die Reduktionszone zu verhindern.

11. System nach einem der Ansprüche 7-9, ferner umfassend einen Aufkohlungsreaktor (213).

12. System nach einem der Ansprüche 7-11, wobei die Aufkohlungszone oder der Aufkohlungsreaktor einen Aufkohlungsgaseinlass und einen Auslass für verbrauchtes Aufkohlungsgas umfasst und wobei das System ferner Folgendes umfasst:
- eine Aufkohlungsgasquelle (245), die in Fluidverbindung mit dem Aufkohlungsgaseinlass angeordnet ist;
- ein Aufkohlungsablassventil (264), das in Fluidverbindung mit dem Auslass für verbrauchtes Aufkohlungsgas angeordnet ist und dazu angeordnet ist, verbrauchtes Aufkohlungsgas zwischen einem Auslass des Aufkohlungsrückführstroms und einem Auslass des Aufkohlungsablassstroms aufzuteilen; und wobei der Auslass des Aufkohlungsablassstroms in Fluidverbindung mit einer Trenneinheit angeordnet ist.

13. System nach Anspruch 12, ferner umfassend eine oder mehrere Kohlenstofftrenneinheiten und wobei der Auslass des Aufkohlungsablassstroms über die eine oder die mehreren Kohlenstofftrenneinheiten in Fluidverbindung mit der Trenneinheit angeordnet ist.

14. System nach einem der Ansprüche 7-13, wobei das System keine CO₂-Trenneinheit umfasst.

15. System nach einem der Ansprüche 7-14, ferner umfassend eine zusätzliche Trenneinheit, die in Fluidverbindung mit einem Auslass des mit Inertgas angereicherten Strom der Trenneinheit angeordnet ist, und wobei die zusätzliche Trenneinheit eine Membrantrenneinheit ist.

## Revendications

1. Procédé de production de fer spongieux à partir de minerai de fer, le procédé comprenant les étapes suivantes :
- le chargement (s303) de minerai de fer (207) dans un puits de réduction directe (211) ;
- l'introduction (s305) d'un gaz réducteur riche en hydrogène (215) comprenant plus de 80 % en volume de gaz d'hydrogène dans le puits de réduction directe afin de réduire le minerai de fer et de produire du fer spongieux (209) ;
- l'élimination (S307) d'un gaz de tête (216) du puits de réduction directe ;
- la soumission du gaz de tête à un échange de chaleur afin de refroidir le gaz de tête et de chauffer le gaz réducteur riche en hydrogène ;
- la division (s309) du gaz de tête en un flux de recyclage (218) et un flux de purge (256) ;
- le traitement (s311) du flux de purge par une unité de séparation (257) pour fournir un flux de sortie enrichi en hydrogène (258) et un flux de sortie enrichi en gaz inerte (259) ; et
- l'introduction (s311) du flux de recyclage et du flux de sortie enrichi en hydrogène en tant que parties constitutives du gaz réducteur riche en hydrogène dans le puits de réduction directe.

2. Procédé selon la revendication 1, dans lequel l'unité de séparation (257) est une unité de séparation cryogénique, une unité de séparation par membrane ou une unité d'absorption à variation de pression.

3. Procédé selon l'une quelconque des revendications précédentes, comprenant en outre une étape d'introduction d'un gaz d'appoint (219) en tant que partie constitutive du gaz réducteur riche en hydrogène dans le puits de réduction directe, le gaz d'appoint comprenant de l'hydrogène gazeux obtenu par électrolyse de l'eau.

4. Procédé selon l'une quelconque des revendications précédentes, comprenant en outre une étape d'introduction d'un gaz d'appoint (219) en tant que partie constitutive du gaz réducteur riche en hydrogène dans le puits de réduction directe, le gaz d'appoint ne comprenant pratiquement aucun composant carboné.

5. Procédé selon l'une quelconque des revendications précédentes, comprenant en outre les étapes suivante :
- la carburation du fer spongieux à l'aide d'un gaz de carburation dans un réacteur de carburation discret (213) ou une zone, obtenant ainsi du fer spongieux carburé et du gaz de carburation usé (248) ;
- la division du gaz de carburation usé en un flux de recyclage de carburation (267) et un flux de purge de carburation (266) ;
- l'élimination des composants carbonés du flux de purge de carburation ; et
- le traitement du flux de purge de carburation dans une unité de séparation.

6. Procédé selon l'une quelconque des revendications précédentes, dans lequel le flux de sortie enrichi en gaz inerte est traité dans une unité de séparation auxiliaire pour fournir un flux de sortie enrichi en hydrogène auxiliaire, et dans lequel l'unité de séparation auxiliaire est de préférence une unité de séparation par membrane.

7. Système de production de fer spongieux, le système comprenant :
- un puits de réduction directe (211) comprenant une entrée de gaz réducteur et une sortie de gaz de tête ;
- une source (220) de gaz d'appoint, constitué essentiellement d'hydrogène gazeux (219), la source de gaz d'appoint étant en communication fluidique avec l'entrée de gaz réducteur ;
- un échangeur de chaleur (251) en communication fluidique avec la sortie de gaz de tête ;
- une vanne de purge (254) disposée en communication fluidique avec la sortie de gaz de tête et disposée pour diviser le gaz de tête entre une sortie de flux de recyclage et une sortie de flux de purge ;
- une unité de séparation (257) disposée en communication fluidique avec la sortie de flux de purge et disposée pour séparer un flux de purge en un flux enrichi en hydrogène et un flux enrichi en gaz inerte.

8. Système selon la revendication 7, dans lequel l'unité de séparation est une unité de séparation cryogénique, une unité de séparation par membrane ou une unité d'absorption à variation de pression.

9. Système selon l'une quelconque des revendications 7 à 8, dans lequel la source d'hydrogène gazeux est une unité d'électrolyseur d'eau.

10. Système selon l'une quelconque des revendications 7 à 9, dans lequel le puits de réduction directe comprend une zone de réduction et une zone de carburation, et dans lequel le puits de réduction directe est agencé pour empêcher le passage de gaz de la zone de carburation à la zone de réduction.

11. Système selon l'une quelconque des revendications 7 à 9, comprenant en outre un réacteur de carburation (213).

12. Système selon l'une quelconque des revendications 7 à 11, dans lequel la zone de carburation ou le réacteur de carburation comprend une entrée de gaz de carburation et une sortie de gaz de carburation usé, et dans lequel le système comprend en outre :
- une source de gaz de carburation (245) agencée en communication fluidique avec l'entrée de gaz de carburation ;
- une vanne de purge de carburation (264) agencée en communication fluidique avec la sortie de gaz de carburation usé et agencée pour diviser le gaz de carburation usé entre une sortie de flux de recyclage de carburation et une sortie de flux de purge de carburation ; et
dans lequel la sortie de flux de purge de carburation est disposée en communication fluidique avec une unité de séparation.

13. Système selon la revendication 12, comprenant en outre une ou plusieurs unités de séparation de carbone, et dans lequel la sortie de flux de purge de carburation est disposée en communication fluidique avec l'unité de séparation via l'une ou plusieurs unités de séparation de carbone.

14. Système selon l'une quelconque des revendications 7 à 13, dans lequel le système ne comprend pas d'unité de séparation de CO₂.

15. Système selon l'une quelconque des revendications 7 à 14, comprenant en outre une unité de séparation auxiliaire disposée en communication fluidique avec une sortie de flux enrichi en gaz inerte de l'unité de séparation, et dans lequel l'unité de séparation auxiliaire est une unité de séparation à membrane.
